# EUROPÄISCHE PATENTSCHRIFT

(11) **EP 1 744 236 B1**
(45) Veröffentlichungstag und Bekanntmachung des Hinweises auf die Patenterteilung: **30.07.2008**
(21) Anmeldenummer: 06021723.9
(22) Anmeldetag: 08.06.2005
(51) Int. Cl.: G06F 1/32

(54) **Konfiguration von Bauelementen bei einem Übergang von einem Niedrigleistungs-Betriebsmodus in einen Normalleistungs-Betriebsmodus**
Configuration of components when changing from a low-power to a normal-power consumption mode
Configuration des constituants hardware durant la transition d'un mode basse-puissance vers un mode normal

(30) Priorität: 02.07.2004 DE 102004032237
(43) Veröffentlichungstag der Anmeldung: 17.01.2007
(62) Teilanmeldung aus: 05012347.0
(73) Patentinhaber: Infineon Technologies AG, 81669 München (DE)
(72) Erfinder: Mahrla, Peter, 85604 Zorneding (DE); Hildebrand, Uwe, 91058 Erlangen (DE); Sellar, David, 81675 München (DE); Goedecke, Michael, 80634 München (DE)
(74) Vertreter: Patentanwälte Lambsdorff & Lange

(56) Entgegenhaltungen:
- EP-A- 0 504 007
- EP-A- 1 037 133
- US-A- 6 065 124
- US-A1- 2004 225 907
- US-B1- 6 230 274

## Beschreibung

Die Erfindung bezieht sich auf die bei einem Übergang von einem Niedrigleistungs-Betriebsmodus in einen Normalleistungs-Betriebsmodus notwendige Konfiguration von Bauelementen bzw. von ganzen Teilen einer Schaltungsanordnung. Insbesondere bezieht sich die Erfindung auf eine derartige Konfiguration einer Steuereinheit, welche in einem Prozessor-Speicher-System die Zugriffe mehrerer Prozessoren auf eine Speichereinheit steuert. Des Weiteren betrifft die Erfindung insbesondere die Wiederherstellung der Inhalte flüchtiger Speicherelemente einer Schaltungsanordnung bei einer Rückkehr in einen Normalleistungs-Betriebsmodus aus einem Niedrigleistungs-Betriebsmodus.

In der vorliegenden Patentanmeldung wird unter einem Niedrigleistungs-Betriebsmodus ein Betriebsmodus verstanden, bei welchem der Energiebedarf des betreffenden Bauelements bzw. der betreffenden Schaltungsanordnung reduziert ist und dementsprechend das Bauelement bzw. die Schaltungsanordnung nicht die Funktionen ausführen können, für welche es bzw. sie eigentlich ausgelegt sind. Ein Niedrigleistungs-Betriebsmodus ist beispielsweise ein Bereitschaftsmodus bzw. ein Stand-by-Betriebsmodus. Unter einem Niedrigleistungs-Betriebsmodus ist auch eine zeitweilige Trennung von der Versorgungsspannung zu verstehen. In einem Normalleistungs-Betriebsmodus können die Funktionen des betreffenden Bauelements bzw. der betreffenden Schaltungsanordnung, für welche das Bauelement bzw. die Schaltungsanordnung ausgelegt sind, ausgeführt werden.

Bei einem Prozessor-Speicher-System, das dazu ausgelegt ist, dass mehrere Prozessoren auf eine Speichereinheit zugreifen können, stellt sich das Problem, dass eine Steuereinheit, welche die Zugriffe der Prozessoren auf die Speichereinheit steuert, bei einem zeitweiligen Herunterfahren in einen Niedrigleistungs-Betriebsmodus ihre Registerwerte verliert. Bei einem späteren "Aufwecken" der Steuereinheit stehen diese Registerwerte der Steuereinheit also nicht mehr zur Verfügung. Der Konfigurationszustand der Steuereinheit ist daher nach dem Hochfahren in den Normalleistungs-Betriebsmodus unbestimmt. Eine genauer Konfigurationszustand der Steuereinheit ist jedoch notwendig, da nur ein solcher Zustand gewährleistet, dass die Steuereinheit mit der Speichereinheit korrekt zusammenwirkt und dass die Datenausgänge der Steuereinheit, über welche die Prozessoren die angeforderten Daten beziehen, in der richtigen Weise eingerichtet sind. Es ist daher erforderlich, nach einer Rückkehr der Steuereinheit in den Normalleistungs-Betriebsmodus die für ihre Konfiguration benötigten Daten wieder in die Register der Steuereinheit zu laden.

Bei herkömmlichen Prozessor-Speicher-Systemen sind die zur Konfiguration der Steuereinheit benötigten Registerwerte in einem nicht-flüchtigen Speicher abgelegt und werden nach dem Zurückführen der Steuereinheit in den Normalleistungs-Betriebsmodus in die Steuereinheit geladen. Dieser Vorgang wird von einem der Prozessoren gesteuert. Nachteilig an dieser Vorgehensweise ist, dass der Prozessor, der für die Konfiguration der Steuereinheit zuständig ist, sich bei jedem derartigen Konfigurationsvorgang selbst in einem Normalleistungs-Betriebsmodus befinden muss. Es kann beispielsweise der Fall auftreten, dass sich sämtliche Prozessoren und die Steuereinheit in einem Niedrigleistungs-Betriebsmodus befinden. Sobald einer der Prozessoren "aufgeweckt" wird und dieser Prozessor Daten aus der Speichereinheit benötigt, muss nicht nur die Steuereinheit, sondern auch der für ihre Konfiguration zuständige Prozessor in den Normalleistungs-Betriebsmodus zurückgeführt werden. Dieser Prozessor kann also in einem derartigen Fall nicht im Niedrigleistungs-Betriebsmodus belassen werden. Dies bedingt einen erhöhten Strombedarf des Prozessor-Speicher-Systems. Ferner ist ein hoher Software-Aufwand zur Steuerung des Prozessor-Speicher-Systems erforderlich.

Das vorstehend beschriebene Problem stellt sich nicht nur bei Prozessor-Speicher-Systemen, sondern ganz allgemein bei Schaltungsanordnungen, welche einen Schaltungsteil aufweisen, der in einen Niedrigleistungs-Betriebsmodus heruntergefahren werden kann. Bei einer späteren Aktivierung dieses Schaltungsteils sind die Inhalte von flüchtigen Speicherelementen und Registern nicht mehr vorhanden. Um den Zustand, der vor dem Herunterfahren in den Niedrigleistungs-Betriebsmodus bestand, wiederherzustellen, müssen die Inhalte von flüchtigen Speicherelementen und Registern vor dem Herunterfahren in einen Speicher, der seinen Inhalt während des Niedrigleistungs-Betriebsmodus des betreffenden Schaltungsteils beibehält, geladen werden. Nach der Wiederherstellung des Normalleistungs-Betriebsmodus können die zuvor zwischengespeicherten Daten wieder in die entsprechenden Speicherelemente und Register des betreffenden Schaltungsteils transferiert werden. Das beschriebene Zwischenspeichern der Daten und ihr späteres Zurückschreiben in die flüchtigen Speicherelemente und Register wird bei herkömmlichen Schaltungsanordnungen von einem Prozessor vorgenommen. Dies bedingt einen erhöhten Stromverbrauch und eine komplexe Software.

In der Druckschrift US 6,230,274 B1 wird ein Prozessor-Speicher-System offenbart, das einen Prozessor, eine Speichereinheit und eine Speichersteuereinheit umfasst. Dabei beinhaltet die Speichersteuereinheit eine Konfigurationseinheit, die nach dem Verlassen eines Niedrigleistungs-Betriebsmodus Konfigurationsdaten aus einem Zwischenspeicher lädt, die Speichersteuereinheit gemäß dieser geladenen Konfigurationsdaten konfiguriert und damit den betriebsgerechten Zustand vor dem Eintreten in den Niedrigleistungs-Betriebsmodus der Speichersteuereinheit wieder herstellt. Da allerdings die Konfigurationseinheit hardwaremäßig als Teil der Speichersteuereinheit ausgebildet ist, verliert die Konfigurationseinheit mit dem Eintritt der Speichersteuereinheit in einen Niedrigleistungs-Betriebsmodus die zwischengespeicherten Konfigurationsdaten. Bei einem Wiedereintritt in einen Normalleistungs-Betriebsmodus muss daher zusätzlicher Zeit- und Rechenleistungsaufwand betrieben werden, die Konfigurationseinheit wieder mit den nötigen Konfigurationsdaten zu versorgen.

Aufgabe der Erfindung ist daher, eine Schaltungsanordnung zu schaffen, von der sich zumindest ein Teil zeitweise in einem Niedrigleistungs-Betriebsmodus befinden kann. Bei einem anschließenden Hochfahren dieses Schaltungsteils soll sich der ursprüngliche Zustand des Schaltungsteils mit relativ geringem Aufwand wiederherstellen lassen. Insbesondere soll ein Prozessor-Speicher-System mit einer Steuereinheit zur Steuerung der Zugriffe der Prozessoren auf die Speichereinheit geschaffen werden, wobei die Steuereinheit zeitweilig in einen Niedrigleistungs-Betriebsmodus überführt werden kann und das Prozessor-Speicher-System einen geringeren Strombedarf sowie eine geringere Software-Komplexität als herkömmliche Systeme aufweist. Ferner soll ein Verfahren zum Wechseln eines Prozessors des besagten Prozessor-Speicher-Systems in den Niedrigleistungs-Betriebsmodus angegeben werden. Darüber hinaus soll ein Verfahren zur Rückkehr der Steuereinheit des Prozessor-Speicher-Systems in den Normalleistungs-Betriebsmodus angegeben werden.

Die der Erfindung zugrunde liegende Aufgabenstellung wird durch die Merkmale der unabhängigen Patentansprüche 1, 13 und 15 gelöst. Vorteilhafte Weiterbildungen und Ausgestaltungen der Erfindung sind in den Unteransprüchen angegeben.

Das erfindungsgemäße Prozessor-Speicher-System umfasst mindestens einen Prozessor, eine Speichereinheit, mindestens eine erste Speichersteuereinheit und eine Konfigurationseinheit.

Sofern das Prozessor-Speicher-System eine Mehrzahl von Prozessoren aufweist, wird die Speichereinheit von den Prozessoren gemeinsam genutzt. Die mindestens eine erste Speichersteuereinheit ist zwischen dem mindestens einen Prozessor und der Speichereinheit angeordnet und steuert die Zugriffe des mindestens einen Prozessors auf die Speichereinheit, d.h. der mindestens eine Prozessor greift über die mindestens eine erste Speichersteuereinheit auf die in der Speichereinheit abgelegten Daten zu. Die Konfigurationseinheit hat zur Aufgabe, die mindestens eine erste Speichersteuereinheit bei einem Wechsel der mindestens einen ersten Speichersteuereinheit von einem Niedrigleistungs-Betriebsmodus in einen Normalleistungs-Betriebsmodus zu konfigurieren. Die Konfigurationseinheit ist vorzugsweise nur für diese Aufgabe ausgelegt und hat keine weiteren Aufgaben. Die Konfigurationseinheit ist als Hardware-Bauelement realisiert. In der vorliegenden Patentanmeldung wird unter einem Hardware-Bauelement ein Bauelement verstanden, dass nicht in der Lage ist, Maschinencodes zu verarbeiten. Im Gegensatz dazu können auf Software-Bauelementen, wie beispielsweise auf Prozessoren, Programme in Maschinencode ausgeführt werden.

Bei dem erfindungsgemäßen Prozessor-Speicher-System wird die Konfiguration der mindestens einen ersten Speichersteuereinheit bei einer Rückkehr von einem Niedrig- in einen Normalleistungs-Betriebsmodus von einer Hardwareeinheit durchgeführt und nicht von einem Prozessor wie bei herkömmlichen Prozessor-Speicher-Systemen. Somit ist im Unterschied zu herkömmlichen Prozessor-Speicher-Systemen der mindestens eine Prozessor erfindungsgemäß von dieser Aufgabe entbunden. Dies hat zur Folge, dass der mindestens eine Prozessor bei einer Rückkehr der mindestens einen ersten Speichersteuereinheit in den Normalleistungs-Betriebsmodus grundsätzlich in einem Niedrigleistungs-Betriebsmodus verbleiben kann. Im Ergebnis wird dadurch der Energieverbrauch des Prozessor-Speicher-Systems reduziert und die Komplexität der auf den Prozessoren ablaufenden Software verringert.

Vorzugsweise enthält die Konfigurationseinheit eine Datentransfereinheit und einen Zwischenspeicher. Die Datentransfereinheit ist derart ausgelegt, dass sie bei einem Wechsel der mindestens einen ersten Speichersteuereinheit von einem Niedrigleistungs-Betriebsmodus in einen Normalleistungs-Betriebsmodus erste Konfigurationsdaten, die zuvor in dem Zwischenspeicher abgelegt wurden, in Register der mindestens einen ersten Speichersteuereinheit schreibt. Die ersten Konfigurationsdaten dienen zur Konfiguration der mindestens einen ersten Speichersteuereinheit.

Die Datentransfereinheit ist in Hardware ausgeführt. Der Zwischenspeicher kann ein statischer RAM, ein FIFO-Speicher oder ein ähnliches Speicherbauelement sein, das für die Speicherung der ersten Konfigurationsdaten geeignet ist. Insbesondere darf der Zwischenspeicher während eines Niedrigleistungsbetriebs der mindestens einen ersten Speichersteuereinheit seinen Speicherinhalt nicht verlieren. Folglich ist der Zwischenspeicher entweder so ausgelegt, dass er seinen Inhalt auch während eines Niedrigleistungsbetriebs beibehält, oder er wird während eines Niedrigleistungsbetriebs der mindestens einen ersten Speichersteuereinheit nicht selbst heruntergefahren.

Des Weiteren transferiert die Datentransfereinheit vorzugsweise vor einem Herunterfahren der mindestens einen ersten Speichersteuereinheit in einen Niedrigleistungs-Betriebsmodus erste Konfigurationsdaten aus den Registern der mindestens einen ersten Speichersteuereinheit in den Zwischenspeicher. Diese Maßnahme ermöglicht es, nach Beendigung des Niedrigleistungs-Betriebsmodus die Konfiguration der mindestens einen ersten Speichersteuereinheit, wie sie vor dem Herunterfahren bestand, wiederherzustellen.

Gemäß einer besonders bevorzugten Ausgestaltung der Erfindung ist eine zweite Steuereinheit vorgesehen, welche die Konfigurationseinheit steuert. Die zweite Steuereinheit ist insbesondere durch eine Hardware-Einheit realisiert. Die zweite Steuereinheit kann beispielsweise Steuersignale an die Konfigurationseinheit übermitteln, um diese zu veranlassen, einen aufgrund eines Wechsels des Betriebsmodus notwendigen Datentransfer zwischen der mindestens einen ersten Speichersteuereinheit und dem Zwischenspeicher durchzuführen.

Eine weitere bevorzugte Ausgestaltung des erfindungsgemäßen Prozessor-Speicher-Systems sieht vor, dass die Konfigurationseinheit oder gegebenenfalls die Datentransfereinheit programmierbar sind.

Vorzugsweise kann vorgesehen sein, dass in dem Zwischenspeicher mehrere Sätze von ersten Konfigurationsdaten abgelegt sind. Diese Maßnahme ermöglicht es, die mindestens eine erste Speichersteuereinheit in verschiedenen Normalleistungs-Betriebsmodi zu betreiben, wobei die Normalleistungs-Betriebsmodi jeweils durch unterschiedliche Sätze von ersten Konfigurationsdaten charakterisiert sind.

Welcher der Sätze von ersten Konfigurationsdaten bei einer Rückkehr in den Normalleistungs-Betriebsmodus in die Register der mindestens einen Speichersteuereinheit geladen wird, kann beispielsweise vor dem Herunterfahren in den Niedrigleistungs-Betriebsmodus festgelegt werden. Eine entsprechende Steuerinformation wird dann in dem Zwischenspeicher abgelegt. Alternativ dazu kann auch vorgesehen sein, dass diese Steuerinformation bei der Rückkehr in einen Normalleistungs-Betriebsmodus von der zweiten Steuereinheit erzeugt wird.

Ferner ist es vorteilhaft, einen Prozessor aus der Mehrzahl von Prozessoren auszuwählen, welcher als einziger Prozessor berechtigt ist, die Konfigurationseinheit oder gegebenenfalls die Datentransfereinheit zu konfigurieren. Diese Aufgabe kann beispielsweise darin bestehen, dass der Prozessor festlegt, die Werte welcher Register aus der mindestens einen ersten Speichersteuereinheit in den Zwischenspeicher geschrieben werden.

Der ausgewählte Prozessor kann vorzugsweise mehrere Sätze von zweiten Konfigurationsdaten für die Konfiguration der Konfigurationseinheit bzw. der Datentransfereinheit erzeugen. Diese zweiten Konfigurationsdatensätze werden insbesondere in dem Zwischenspeicher abgelegt. Diese Maßnahme ermöglicht es beispielsweise, für jeden der Prozessoren einen eigenen zweiten Konfigurationsdatensatz vorzusehen. Wird nur ein Prozessor aufgeweckt, während die übrigen Prozessoren in einem Niedrigleistungs-Betriebsmodus verbleiben, muss die mindestens eine erste Speichersteuereinheit anhand eines bestimmten zweiten Konfigurationsdatensatzes nur soweit konfiguriert werden, wie dies für den Betrieb des aufgeweckten Prozessors notwendig ist.

In diesem Zusammenhang ist es besonders vorteilhaft, wenn der aufgeweckte Prozessor einen der zweiten Konfigurationsdatensätze auswählen kann.

Die Datentransfereinheit kann beispielsweise durch einen DMA (Direct Memory Access)-Controller realisiert sein.

Vorzugsweise befinden sich die Speichereinheit und die mindestens eine erste Speichersteuereinheit immer gleichzeitig in einem Niedrigleistungs-Betriebsmodus. Dies reduziert den Strombedarf des erfindungsgemäßen Prozessor-Speicher-Systems.

Das erste erfindungsgemäße Verfahren dient zum Wechseln mindestens eines Prozessors des erfindungsgemäßen Prozessor-Speicher-Systems aus einem Niedrigleistungs- in einen Normalleistungs-Betriebsmodus. Es wird davon ausgegangen, dass sich die mindestens eine erste Speichersteuereinheit zu Beginn des Verfahrens in einem Niedrigleistungs-Betriebsmodus befindet. Aus diesem Grund wird zunächst die mindestens eine erste Speichersteuereinheit in den Normalleistungs-Betriebsmodus überführt. Dazu wird die mindestens eine erste Speichersteuereinheit in einem ersten Verfahrensschritt mit einer Versorgungsspannung beaufschlagt und in einem zweiten Verfahrensschritt wird die mindestens eine erste Speichersteuereinheit durch die Konfigurationseinheit konfiguriert. Nachdem sämtliche Voraussetzungen für einen Normalleistungs-Betrieb der mindestens einen ersten Speichersteuereinheit erfüllt sind, kann der Betriebsmodus des mindestens einen Prozessors von einem Niedrigleistungs- in einen Normalleistungs-Betriebsmodus geändert werden und der mindestens eine Prozessor kann nunmehr über die mindestens eine erste Speichersteuereinheit auf die Speichereinheit zugreifen.

Durch das erfindungsgemäße erste Verfahren wird sichergestellt, dass der betreffende Prozessor erst dann auf die Speichereinheit zugreift, wenn die mindestens eine erste Speichersteuereinheit voll betriebsfähig ist.

Vorzugsweise wird die Überführung der mindestens einen ersten Speichersteuereinheit in den Normalleistungs-Betriebsmodus durch ein von der zweiten Steuereinheit erzeugtes Steuersignal initiiert.

Das zweite erfindungsgemäße Verfahren ermöglicht einen Wechsel der mindestens einen ersten Speichersteuereinheit des erfindungsgemäßen Prozessor-Speicher-Systems von einem Normalleistungs-Betriebsmodus in einen Niedrigleistungs-Betriebsmodus. In einem ersten Verfahrensschritt werden die in den Registern der mindestens einen ersten Speichersteuereinheit vorhandenen ersten Konfigurationsdaten in den Zwischenspeicher geschrieben. In einem zweiten Verfahrensschritt wird die mindestens eine erste Speichersteuereinheit von ihrer Versorgungsspannung getrennt.

Vorzugsweise wird der erste Verfahrensschritt durch ein von der zweiten Steuereinheit erzeugtes Steuersignal gestartet.

Ein weiterer Aspekt der Erfindung bezieht sich auf eine Schaltungsanordnung mit einem Schaltungsteil, welcher Speicherelemente aufweist, die bei einem Niedrigleistungs-Betriebsmodus ihre Speicherinhalte verlieren. Des Weiteren enthält die erfindungsgemäße Schaltungsanordnung eine Speichereinheit, die im Gegensatz zu den Speicherelementen des Schaltungsteils ihren Speicherinhalt während eines Niedrigleistungs-Betriebmodus des Schaltungsteils beibehält. Ferner ist ein DMA-Controller vorgesehen, welcher dazu ausgelegt ist, die in vorgegebenen Speicherelementen des Schaltungsteils abgelegten Daten vor einem Wechsel des Schaltungsteils von einem Normalleistungs-Betriebsmodus in einen Niedrigleistungs-Betriebsmodus in die Speichereinheit zu schreiben und diese Daten nach der Rückkehr des Schaltungsteils in den Normalleistungs-Betriebsmodus wieder in die Speicherelemente zurückzutransferieren.

Die erfindungsgemäße Schaltungsanordnung entlastet einen Prozessor, welcher bei herkömmlichen Schaltungsanordnungen für den Datentransfer im Zuge eines Wechsels des Betriebsmodus zuständig ist. Dadurch werden Chipfläche, Stromverbrauch und Software-Aufwand reduziert. Ferner verursacht der DMA-Controller keinen zusätzlichen Aufwand, da er in den meisten Mikrocontroller-Systemen ohnehin vorgesehen ist.

Eine besonders bevorzugte Ausgestaltung der erfindungsgemäßen Schaltungsanordnung sieht zwei Listen bzw. Tabellen vor, welche Informationen über die bei einem Betriebsmoduswechsel vorzunehmenden Datentransfers enthalten. Eine erste Liste beinhaltet die Informationen, die für einen Wechsel des Schaltungsteils von dem Normalleistungs-Betriebsmodus in den Niedrigleistungs-Betriebsmodus erforderlich sind. Eine zweite Liste betrifft den umgekehrten Fall, nämlich einen Wechsel des Schaltungsteils von dem Niedrigleistungs-Betriebsmodus in den Normalleistungs-Betriebsmodus.

Die beiden Listen enthalten beispielsweise Angaben über die Start- und Zieladressen der auszuführenden Datentransfers, Angaben über die Inkrementoperationen bezüglich der Start- bzw. Zieladressen nach einem ausgeführten Datentransfer sowie Angaben über die Anzahl der auszuführenden Datentransfers.

Die erste Liste und/oder die zweite Liste sind vorzugsweise in der Speichereinheit abgelegt. Damit wird sichergestellt, dass die beiden Listen nach dem Ende des Niedrigleistungs-Betriebsmodus zur Verfügung stehen.

Die Speicherelemente des Schaltungsteils, die bei einem Niedrigleistungs-Betriebsmodus ihre Speicherinhalte verlieren, können beispielsweise flüchtige Speicher und/oder Register sein.

Vorzugsweise ist eine Hardwareeinheit oder ein Prozessor vorgesehen, welche oder welcher dazu ausgelegt ist, Steuersignale zu erzeugen, die vor einem Wechsel des Schaltungsteils von einem Normalleistungs-Betriebsmodus in einen Niedrigleistungs-Betriebsmodus und/oder nach der Rückkehr des Schaltungsteils in den Normalleistungs-Betriebsmodus den DMA-Controller veranlassen, die notwendigen Datentransfers auszuführen.

Des Weiteren kann vorteilhafterweise der DMA-Controller auch selbst in einen Niedrigleistungs-Betriebsmodus überführt werden. In diesem Fall muss der DMA-Controller derart ausgelegt sein, dass er beim Hochfahren aus dem Niedrigleistungs-Betriebsmodus die für seine Konfiguration benötigten Konfigurationsdaten aus der Speichereinheit lädt.

Die Erfindung wird nachfolgend in beispielhafter Weise unter Bezugnahme auf die Zeichnungen näher erläutert. In diesen zeigen:
- Fig. 1: ein Blockschaltbild eines Prozessor-Speicher-Systems 1 gemäß dem Stand der Technik;
- Fig. 2: ein Blockschaltbild eines Prozessor-Speicher-Systems 10 als Ausführungsbeispiel des erfindungsgemäßen Prozessor-Speicher-Systems;
- Fig. 3: ein Ablaufdiagramm zur Veranschaulichung der Funktionsweise des in Fig. 2 gezeigten Prozessor-Speicher-Systems 10;
- Fig. 4: ein detaillierterer Ausschnitt aus dem in Fig. 2 gezeigten Blockschaltbild des Prozessor-Speicher-Systems 10; und
- Fig. 5: ein Blockschaltbild einer Schaltungsanordnung 300 als Ausführungsbeispiel der erfindungsgemäßen Schaltungsanordnung.

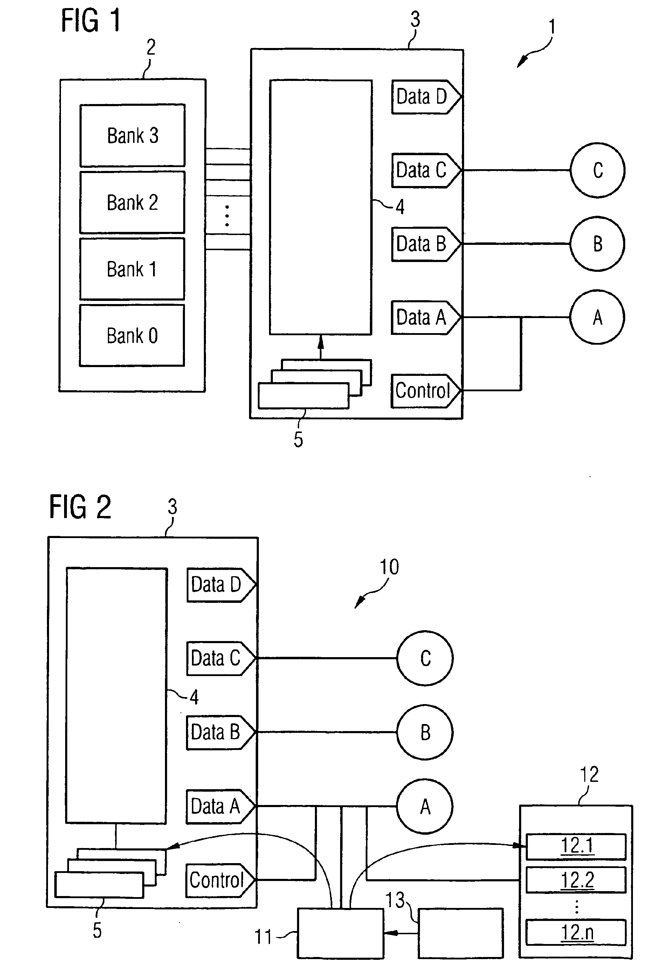

In Fig. 1 ist ein Blockschaltbild eines herkömmlichen Prozessor-Speicher-Systems 1 dargestellt. Das Prozessor-Speicher-System 1 besteht aus Prozessoren A, B und C, einem SDRAM 2 und einem SDRAM-Controller 3. Der SDRAM-Controller 3 ist zwischen die Prozessoren A, B sowie C und das SDRAM 2 geschaltet.

Die Prozessoren A, B und C nutzen das SDRAM 2 als gemeinsame Speichereinheit. Der SDRAM-Controller 3 steuert die Zugriffe der Prozessoren A, B und C auf das SDRAM 2. Der Datenaustausch der Prozessoren A, B und C mit dem SDRAM 2 erfolgt über die Datenein- und ausgänge Data A, Data B und Data C des SDRAM-Controllers 3. Um die Datenübermittlung und Steuerung zu ermöglichen, weist der SDRAM-Controller 3 eine Zugriffs- und Steuereinheit 4 auf. Die Zugriffs- und Steuereinheit 4 steht mit Registern 5 in Verbindung, in welchen Konfigurationsdaten über einen Steuerungsein- und -ausgang Control abgelegt werden. Die in den Registern 5 abgelegten Konfigurationsdaten gewährleisten ein korrektes Zusammenwirken des SDRAM-Controllers 3 mit dem SDRAM 2. Außerdem werden mit Hilfe der Konfigurationsdaten die Datenein- und ausgänge Data A, Data B und Data C konfiguriert. Bei dem in Fig. 1 dargestelltem Prozessor-Speicher-System 1 werden die Konfigurationsdaten von dem Prozessor A generiert und in die Register 5 geschrieben.

Sofern sich der SDRAM-Controller 3 in einem Niedrigleistungs-Betriebsmodus, also beispielsweise in einem Stand-by-Betriebsmodus, befindet und aus diesem "aufgeweckt" wird, weil beispielsweise einer der Prozessoren A, B oder C auf das SDRAM 2 zugreifen will, müssen die Konfigurationsdaten von dem Prozessor A erneut in die Register 5 geschrieben werden, da während der Niedrigleistungsphase des SDRAM-Controllers 3 die Inhalte der Register 5 gelöscht wurden. Um die Konfigurationsdaten in die Register 5 schreiben zu können, muss der Prozessor A sich in einem Normalleistungs-Betriebsmodus befinden. Der Prozessor A wird also - sofern er sich zu diesem Zeitpunkt in einem Niedrigleistungs-Betriebsmodus befindet - ebenfalls "aufgeweckt" werden. Der Prozessor A muss folglich immer dann in seinen Normalleistungs-Betriebsmodus zurückkehren, wenn sich das gesamte Prozessor-Speicher-System 1 in einem Niedrigleistungs-Betriebsmodus befindet und einer der Prozessoren B oder C auf das SDRAM 2 zugreifen will.

In Fig. 2 ist ein Prozessor-Speicher-System 10 als Ausführungsbeispiel des erfindungsgemäßen Prozessor-Speicher-Systems dargestellt. Da einige Bauelemente der Prozessor-Speicher-Systeme 1 und 10 identisch sind, sind diese Bauelemente in den Fig. 1 und 2 mit denselben Bezugszeichen versehen. Das SDRAM 2 des Prozessor-Speicher-Systems 10 ist in Fig. 2 nicht dargestellt.

In dem Prozessor-Speicher-System 10 kommt dem Prozessor A weiterhin die Aufgabe zu, die Konfigurationsdaten für den SDRAM-Controller 3 zu generieren und diese in den Registern 5 abzulegen. Im Gegensatz zu dem in Fig. 1 gezeigten herkömmlichen Prozessor-Speicher-System 1 werden die Konfigurationsdaten bei einer Rückkehr des SDRAM-Controllers 3 in den Normalleistungs-Betriebsmodus jedoch nicht von dem Prozessor A wieder in die Register 5 geschrieben. Vielmehr wird dieser Datentransfer bei dem Prozessor-Speicher-System 10 von einer Datentransfereinheit (save-restore engine) 11 durchgeführt. Die Datentransfereinheit 11 ist als Hardware-Einheit ausgebildet.

Damit die Datentransfereinheit 11 auch nach einer Niedrigleistungsphase über die Konfigurationsdaten verfügen kann, werden die Konfigurationsdaten vor einem Herunterfahren des SDRAM-Controllers 3 aus einem Normalleistungs- in einen Niedrigleistungs-Betriebsmodus von der Datentransfereinheit 11 in einen Zwischenspeicher (data shadow store) 12 geschrieben. Bei der Rückkehr des SDRAM-Controllers 3 in den Normalleistungs-Betriebsmodus werden die Konfigurationsdaten aus dem Zwischenspeicher 12 wieder in die Register 5 des SDRAM-Controllers 3 zurückgeschrieben.

Der Datentransfereinheit 11 wird ein Betriebsmoduswechsel des SDRAM-Controllers 3 von einer Steuereinheit (power state machine) 13 signalisiert. Die Steuereinheit 13 ist ebenfalls in Hardware ausgeführt. Nach Erhalt eines Steuersignals von der Steuereinheit 13 kann die Datentransfereinheit 11 die benötigten Lese/Schreibvorgänge zwischen den Registern 5 des SDRAM-Controllers 3 und dem Zwischenspeicher 12 autonom ausführen.

Der Zwischenspeicher 12 weist Register 12.1 bis 12.n auf, in denen die aus den Registern 5 des SDRAM-Controllers 3 geladenen Registerwerte abgelegt werden. Um sicherzustellen, dass die Register 12.1 bis 12.n während eines Niedrigleistungs-Betriebsmodus des SDRAM-Controllers 3 ihre Registerinhalte nicht verlieren, wird der Zwischenspeicher 12 während dieser Zeiträume nicht von seiner Spannungsversorgung getrennt. Der Zwischenspeicher 12 kann beispielsweise als statischer RAM oder als FIFO-Speicher realisiert sein.

Es kann vorgesehen sein, dass in dem Zwischenspeicher 12 mehrere Sätze von Konfigurationsdaten abgelegt sind, welche in die Register 5 des SDRAM-Controllers 3 geladen werden können. Diese Maßnahme ermöglicht es, den SDRAM-Controller 3 in verschiedenen Normalleistungs-Betriebsmodi zu betreiben.

Welcher der Sätze von Konfigurationsdaten bei einer Rückkehr in den Normalleistungs-Betriebsmodus in die Register 5 geladen wird, kann beispielsweise vor dem Herunterfahren in den Niedrigleistungs-Betriebsmodus festgelegt werden. Eine entsprechende Steuerinformation wird dann in dem Zwischenspeicher 12 abgelegt. Alternativ dazu kann auch vorgesehen sein, dass diese Steuerinformation bei der Rückkehr in einen Normalleistungs-Betriebsmodus von der Steuereinheit 13 erzeugt wird.

Die Datentransfereinheit 11 wird von dem Prozessor A konfiguriert, d.h. der Prozessor A spezifiziert, die Inhalte welcher Register 5 des SDRAM-Controllers 3 bei einem Herunterfahren in den Niedrigleistungs-Betriebsmodus in den Zwischenspeicher 12 transferiert werden sollen und in welche Register des Zwischenspeichers 12 diese Werte geschrieben werden sollen. Da diese Konfigurationsdaten der Datentransfereinheit 11 nicht gelöscht werden dürfen, darf die Datentransfereinheit 11 nicht heruntergefahren werden.

Sobald die Datentransfereinheit 11 einmal von dem Prozessor A konfiguriert wurde, können die Übergänge zwischen Niedrig- und Normalleistungs-Betriebsmodi vollständig von Hardware-Einheiten durchgeführt werden.

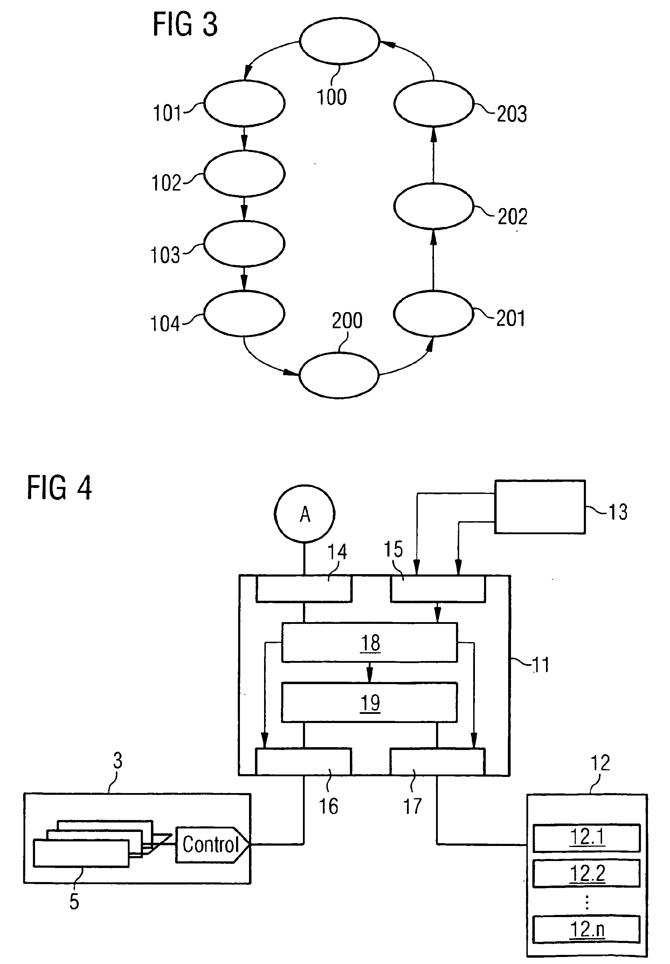

In Fig. 3 sind in einem Ablaufdiagramm die durchzuführenden Verfahrensschritte bei Übergängen zwischen einem Normalleistungs-Betriebsmodus 100 und einem Niedrigleistungs-Betriebsmodus 200 aufgetragen.

Zunächst wird der Übergang von dem Normalleistungs-Betriebsmodus 100 zu dem Niedrigleistungs-Betriebsmodus 200 betrachtet. Dieser Übergang wird ausgelöst durch ein Triggersignal. Dieses Triggersignal wird entweder direkt von dem Prozessor A in seiner Funktion als System-Master-Prozessor generiert oder es wird automatisch generiert, sobald sich alle Prozessoren A, B und C in einem Niedrigleistungs-Betriebsmodus befinden.

Anschließend signalisiert die Steuereinheit 13 der Datentransfereinheit 11, dass die Werte aus den vorgegebenen Registern 5 in die Register des Zwischenspeichers 12 geschrieben werden sollen. Dieser Datentransfer wird von der Datentransfereinheit 11 in einem Verfahrensschritt 101 durchgeführt. In einem anschließenden Verfahrensschritt 102 aktiviert das SDRAM 2 seinen Self-Refresh-Modus. Bevor die Versorgungsspannung des SDRAM-Controllers 3 in einem Verfahrensschritt 104 ausgeschaltet wird, werden die Einstellung des SDRAM-Controllers 3 in einem Verfahrensschritt 103 zurückgesetzt. Danach ist der Niedrigleistungs-Betriebsmodus 200 des SDRAM-Controllers 3 erreicht.

Der Übergang von dem Niedrigleistungs-Betriebsmodus 200 in den Normalleistungs-Betriebsmodus 100 wird wiederum durch ein Triggersignal ausgelöst. Dieses Triggersignal wird entweder direkt von dem Prozessor A in seiner Funktion als System-Master-Prozessor generiert oder es wird automatisch generiert, sobald einer der Prozessoren A, B und C "aufgeweckt" wird.

In einem Verfahrensschritt 201 wird die Versorgungsspannung des SDRAM-Controllers 3 wieder aufgebaut. In einem Verfahrensschritt 202 wird der in dem Verfahrensschritt 103 aktivierte Reset-Modus des SDRAM-Controllers 3 deaktiviert.

Anschließend wird von der Steuereinheit 13 ein Steuersignal generiert, um der Datentransfereinheit 11 anzuzeigen, dass sie in einem Verfahrensschritt 203 die in dem Verfahrensschritt 101 in den Zwischenspeicher 12 transferierten Daten wieder in vorgegebene Register 5 des SDRAM-Controllers 3 zurückschreiben soll. Danach ist der Normalleistungs-Betriebsmodus 100 des SDRAM-Controllers 3 wiederhergestellt.

In Fig. 4 ist ein Ausschnitt aus dem in Fig. 2 dargestellten Prozessor-Speicher-System 10 gezeigt. Dabei ist die Datentransfereinheit 11 detaillierter dargestellt.

Vorliegend weisen die Register 5 des SDRAM-Controllers 3 aufeinanderfolgende Adressen auf und der Zwischenspeicher 12 ist Teil eines statischen RAM. Daher lässt sich die Datentransfereinheit 11 mit Hilfe eines DMA-Controllers realisieren, wobei der DMA-Controller Daten von den Registern 5 des SDRAM-Controllers 3 zu dem statischen RAM in einem Speicher-zu-Speicher-Transfermodus transferiert.

In Fig. 4 bezeichnen die Bezugszeichen 14 bis 17 Schnittstellen der Datentransfereinheit 11 mit den an sie angeschlossenen Bauelementen. Über die Schnittstelle 15 nimmt die Datentransfereinheit 11 die von der Steuereinheit 13 generierten Steuersignale entgegen, durch welche die oben beschriebenen Datentransferprozesse ausgelöst werden.

Des Weiteren weist die Datentransfereinheit 11 eine zentrale Steuerlogik 18 mit Konfigurationsregistern auf und eine DMA-Kanal-Logik 19.

Es kann vorgesehen sein, dass der Prozessor A mehrere Sätze von Konfigurationsdaten für die Konfiguration der Datentransfereinheit 11 erzeugt. Diese Konfigurationsdatensätze werden in dem Zwischenspeicher 12 abgelegt. Die Prozessoren A, B und C können unter den dort abgelegten Sätzen einen für die jeweilige Situation geeigneten Satz auswählen.

Ein Triggersignal zeigt der Datentransfereinheit 11 an, welchen Konfigurationsdatensatz sie von dem Zwischenspeicher 12 in ihre Konfigurationsregister laden soll. Die Konfiguration der Datentransfereinheit kann also auch von den Prozessoren B und C geändert werden, ohne dass der Prozessor A in diesen Konfigurationsprozess unmittelbar involviert ist.

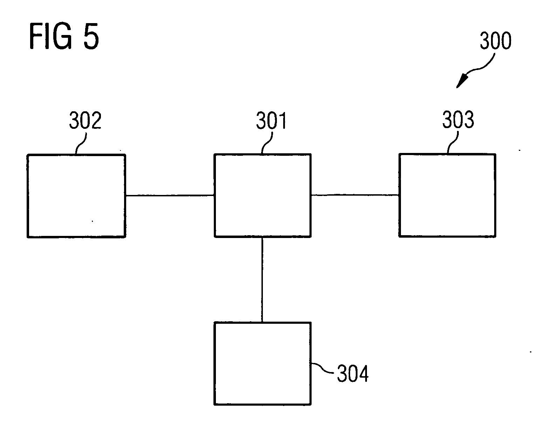

In Fig. 5 ist das Blockschaltbild einer Schaltungsanordnung 300 als Ausführungsbeispiel der erfindungsgemäßen Schaltungsanordnung dargestellt. Die Schaltungsanordnung 300 enthält einen DMA-Controller 301, welcher zwischen einen Schaltungsteil 302 der Schaltungsanordnung 300 und einen Zwischenspeicher 303 geschaltet ist. Ferner ist der DMA-Controller 301 an eine Steuereinheit 304 angeschlossen.

Der Schaltungsteil 302 ist derart ausgeführt, dass er bei Bedarf in einen Niedrigleistungs-Betriebsmodus überführt werden kann. Da die Register und die flüchtigen Speicherelemente des Schaltungsteils 302 im Niedrigleistungs-Betriebsmodus ihre Inhalte verlieren, müssen diese Inhalte vor dem Herunterfahren des Schaltungsteils 302 in den Niedrigleistungs-Betriebsmodus in dem Zwischenspeicher 303 zwischengespeichert werden. Diese Maßnahme gewährleistet, dass die zwischengespeicherten Daten nach einem späteren "Aufwecken" des Schaltungsteils 302 zur Verfügung stehen und wieder in den Schaltungsteil 302 geladen werden können.

Dem zwischen dem Schaltungsteil 302 und dem Zwischenspeicher 303 angeordneten DMA-Controller 301 kommt die Aufgabe zu, die vorstehend beschriebenen Datentransfers bei einem Wechsel des Betriebsmodus vorzunehmen. Zu diesem Zweck hat der DMA-Controller 301 Zugriff auf zwei Listen, die jeweils die benötigten Informationen für eine Datentransferrichtung enthalten. Jede Liste enthält die Start- und Zieladressen, die Inkrementoperationen für die Start- und Zieladressen sowie die Anzahl der auszuführenden Datentransfers. In jeder Liste können auch Sequenzen von Datentransfers beschrieben sein. In diesem Fall werden die Daten für jeden Datentransferblock nacheinander automatisch von dem DMA-Controller 301 gelesen. Die beiden Listen können beispielsweise in dem Zwischenspeicher 303 abgelegt sein.

Sobald der Schaltungsteil 302 in einen Niedrigleistungs-Betriebsmodus überführt werden soll, wird dies dem DMA-Controller 301 von der Steuereinheit 304 signalisiert, woraufhin der DMA-Controller 301 die in der einen Liste beschriebene Datensicherung durchführt. Nach Abschluss dieses Datensicherungsvorgangs kann der Schaltungsteil 302 von seiner Versorgungsspannung getrennt werden.

Nach dem Ende der Niedrigleistungsphase erhält der DMA-Controller 301 wiederum ein Steuersignal von der Steuereinheit 304, damit er die zuvor zwischengespeicherten Daten wieder in die Register und flüchtigen Speicherelemente des Schaltungsteils 302 schreibt. Erst nachdem dieser Vorgang abgeschlossen ist, kann ein in der Schaltungsanordnung 300 angeordneter Mikrocontroller wieder auf den Schaltungsteil 302 zugreifen. Sollte der Mikrocontroller auch heruntergefahren worden sein, so wird der Mikrocontroller erst nach Abschluss des beschriebenen Datentransfers "aufgeweckt".

Es ist des Weiteren auch möglich, den DMA-Controller 301 selbst in einen Niedrigleistungs-Betriebsmodus herunterzufahren. In diesem Fall muss der DMA-Controller 301 so ausgelegt sein, dass er sich selbst - unmittelbar nachdem er aufgeweckt wurde - konfiguriert, indem er Daten aus vorgegebenen Adressen des Zwischenspeichers 303 in seine Register lädt.

Die Steuereinheit 304 kann entweder Teil des Mikrocontrollers sein oder eine Hardware-Einheit.

Der Zwischenspeicher 303 kann sich auf demselben Chip wie der DMA-Controller 301 und der Schaltungsteil 302 befinden oder auch auf einem separaten Chip.

Die Schaltungsanordnung 300 kann beispielsweise in Mobilfunkgeräten eingesetzt werden, deren Speicherelemente in der Regel aus flüchtigen SRAM-Elementen bestehen. Im GSM-Standard ist der Stand-by-Betriebsmodus obligatorisch, sobald sich das Mobilfunkgerät nicht in einer aktiven Phase befindet. Dies ermöglicht es, den Batterieverbrauch gering zu halten. Sofern das Mobilfunkgerät in der Lage sein muss, eingehende Anrufe entgegenzunehmen, beträgt die Dauer der aktiven Phasen typischerweise nur einige Zehn Millisekunden, während die inaktiven Phasen bis zu 2,5 Sekunden dauern können.

DRAM-Speicherelemente können in Mobilfunkgeräten vorzugsweise als Zwischenspeicher eingesetzt werden, da sie in der Lage sind, große Datenmengen mit einer großen Bandbreite zwischenzuspeichern. Dafür eignen sich besonders spezielle DRAMs mit niedrigem Energieverbrauch, die darauf optimiert sind, wenig "refresh"-Strom pro Bit zu benötigen. Die erfindungsgemäße Schaltungsanordnung ermöglicht es, den größten Teil der Logikschaltung des Mobilfunkgeräts bei Bedarf in einen Stand-by-Betriebsmodus zu überführen.

## Patentansprüche

1. Prozessor-Speicher-System (10) mit
- mindestens einem Prozessor (A, B, C),
- einer Speichereinheit (2),
- mindestens einer ersten Speichersteuereinheit (3) zur Steuerung von Zugriffen des mindestens einen Prozessors (A, B, C) auf die Speichereinheit (2), und
- einer Konfigurationseinheit (11, 12), welche in Hardware ausgeführt ist und welche dazu ausgelegt ist, die mindestens eine erste Speichersteuereinheit (3) bei einem Wechsel der mindestens einen ersten Speichersteuereinheit (3) von einem Niedrigleistungs-Betriebsmodus in einen Normalleistungs-Betriebsmodus zu konfigurieren,
**dadurch gekennzeichnet, dass** die Konfigurationseinheit (11, 12) während des Niedrigleistungs-Betriebsmodus der mindestens einen ersten Speichersteuereinheit (3) in einem Normalleistungs-Betriebsmodus verbleibt.

2. Prozessor-Speicher-System (10) nach Anspruch 1,
**dadurch gekennzeichnet,**
- **dass** die Konfigurationseinheit eine Datentransfereinheit (11) und einen Zwischenspeicher (12) aufweist, wobei die Datentransfereinheit (11) derart ausgelegt ist, dass sie bei einem Wechsel der mindestens einen ersten Speichersteuereinheit (3) von einem Niedrigleistungs-Betriebsmodus in einen Normalleistungs-Betriebsmodus erste Konfigurationsdaten für die Konfiguration der mindestens einen ersten Speichersteuereinheit (3) aus dem Zwischenspeicher (12) in Register (5) der mindestens einen ersten Speichersteuereinheit (3) schreibt.

3. Prozessor-Speicher-System (10) nach Anspruch 2,
**dadurch gekennzeichnet,**
- **dass** die Datentransfereinheit (11) derart ausgelegt ist, dass sie vor einem Wechsel der mindestens einen ersten Speichersteuereinheit (3) von einem Normalleistungs-Betriebsmodus in einen Niedrigleistungs-Betriebsmodus erste Konfigurationsdaten aus den Registern (5) der mindestens einen ersten Speichersteuereinheit (3) in den Zwischenspeicher (12) schreibt.

4. Prozessor-Speicher-System (10) nach einem oder mehreren der vorhergehenden Ansprüche,
**gekennzeichnet durch**
- eine zweite Steuereinheit (13) zur Steuerung der Konfigurationseinheit (11, 12), wobei die zweite Steuereinheit (13) insbesondere in Hardware ausgeführt ist.

5. Prozessor-Speicher-System (10) nach einem oder mehreren der vorhergehenden Ansprüche,
**dadurch gekennzeichnet,**
- **dass** die Konfigurationseinheit (11, 12) oder gegebenenfalls die Datentransfereinheit (11) programmierbar sind.

6. Prozessor-Speicher-System (10) nach einem oder mehreren der Ansprüche 2 bis 5,
**dadurch gekennzeichnet,**
- **dass** in dem Zwischenspeicher (12) mehrere Sätze von ersten Konfigurationsdaten für die Konfiguration der mindestens einen ersten Speichersteuereinheit (3) abgelegt sind.

7. Prozessor-Speicher-System (10) nach Anspruch 6,
**dadurch gekennzeichnet,**
- **dass** vor einem Wechsel der mindestens einen ersten Speichersteuereinheit (3) von einem Normalleistungs-Betriebsmodus in einen Niedrigleistungs-Betriebsmodus eine Steuerinformation in dem Zwischenspeicher (12) abgelegt wird, wobei die Steuerinformation darüber informiert, welcher Satz von ersten Konfigurationsdaten bei einer Rückkehr in einen Normalleistungs-Betriebsmodus in die Register (5) der mindestens einen ersten Speichersteuereinheit (3) geschrieben wird, oder
- **dass** diese Steuerinformation bei der Rückkehr in einen Normalleistungs-Betriebsmodus von der zweiten Steuereinheit (13) erzeugt wird.

8. Prozessor-Speicher-System (10) nach einem oder mehreren der vorhergehenden Ansprüche,
**dadurch gekennzeichnet,**
- **dass** ein vorgegebener Prozessor (A) dazu ausgelegt ist, die Konfigurationseinheit (11, 12) oder gegebenenfalls die Datentransfereinheit (11) zu konfigurieren.

9. Prozessor-Speicher-System (10) nach Anspruch 8,
**dadurch gekennzeichnet,**
- **dass** der vorgegebene Prozessor (A) dazu ausgelegt ist, mehrere Sätze von zweiten Konfigurationsdaten für die Konfiguration der Konfigurationseinheit (11, 12) oder gegebenenfalls der Datentransfereinheit (11) zu erzeugen und insbesondere in dem Zwischenspeicher (12) abzulegen.

10. Prozessor-Speicher-System (10) nach Anspruch 9,
**dadurch gekennzeichnet,**
- **dass** mindestens ein weiterer Prozessor (B, C) dazu ausgelegt ist, einen der Sätze von zweiten Konfigurationsdaten für die Konfiguration der Konfigurationseinheit (11, 12) oder gegebenenfalls der Datentransfereinheit (11) auszuwählen.

11. Prozessor-Speicher-System (10) nach einem oder mehreren der Ansprüche 2 bis 10,
**dadurch gekennzeichnet,**
- **dass** die Datentransfereinheit (11) einen DMA-Controller aufweist.

12. Prozessor-Speicher-System (10) nach einem oder mehreren der vorhergehenden Ansprüche,
**dadurch gekennzeichnet,**
- **dass** sich die Speichereinheit (2) während eines Niedrigleistungs-Betriebsmodus der mindestens einen ersten Speichersteuereinheit (3) ebenfalls in einem Niedrigleistungs-Betriebsmodus befindet.

13. Verfahren zum Wechseln mindestens eines Prozessors (A, B, C) des Prozessor-Speicher-Systems (10) nach einem oder mehreren der vorhergehenden Ansprüche aus einem Niedrigleistungs-Betriebsmodus in einen Normalleistungs-Betriebsmodus, wobei sich die mindestens eine erste Speichersteuereinheit (3) zu Beginn des Verfahrens in einem Niedrigleistungs-Betriebsmodus befindet, mit den Schritten:
(a) Beaufschlagen der mindestens einen ersten Speichersteuereinheit (3) mit einer Versorgungsspannung;
(b) Konfigurieren der mindestens einen ersten Speichersteuereinheit (3) durch die Konfigurationseinheit (11, 12); und
(c) Wechseln des mindestens einen Prozessors (A, B, C) von einem Niedrigleistungs-Betriebsmodus in einen Normalleistungs-Betriebsmodus,
**dadurch gekennzeichnet, dass** sich die Konfigurationseinheit (11, 12) zu Beginn des Verfahrens in einem Normalleistungs-Betriebsmodus befindet.

14. Verfahren nach Anspruch 13,
**dadurch gekennzeichnet,**
- **dass** der Schritt (a) durch ein von der zweiten Steuereinheit (13) erzeugtes Steuersignal gestartet wird.

15. Verfahren zum Wechseln der mindestens einen ersten Speichersteuereinheit (3) des Prozessor-Speicher-Systems (10) nach einem oder mehreren der Ansprüche 2 bis 12 aus einem Normalleistungs-Betriebsmodus in einen Niedrigleistungs-Betriebsmodus, mit den Schritten:
(a) Speichern von in den Registern (5) der mindestens einen ersten Speichersteuereinheit (3) abgelegten ersten Konfigurationsdaten in dem Zwischenspeicher (12);
(b) Trennen der mindestens einen ersten Speichersteuereinheit (3) von einer Versorgungsspannung.

16. Verfahren nach Anspruch 15,
**dadurch gekennzeichnet,**
- **dass** der Schritt (a) durch ein von der zweiten Steuereinheit (13) erzeugtes Steuersignal gestartet wird.

## Claims

1. Processor/memory system (10) comprising
- at least one processor (A, B, C),
- a memory unit (2),
- at least one first memory control unit (3) for controlling accesses from the at least one processor (A, B, C) to the memory unit (2), and
- a configuration unit (11, 12) which is in the form of hardware and is designed to configure the at least one first memory control unit (3) when the at least one first memory control unit (3) changes from a low-power operating mode to a normal-power operating mode,
**characterized in that** the configuration unit (11, 12) remains in a normal-power operating mode during the low-power operating mode of the at least one first memory control unit (3).

2. Processor/memory system (10) according to Claim 1,
**characterized**
- **in that** the configuration unit has a data transfer unit (11) and a buffer store (12) with the data transfer unit (11) being designed such that, when the at least one first memory control unit (3) changes from a low-power operating mode to a normal-power operating mode, it writes first configuration data for the configuration of the at least one first memory control unit (3) from the buffer store (12) to registers (5) in the at least one first memory control unit (3).

3. Processor/memory system (10) according to Claim 2,
**characterized**
- **in that** the data transfer unit (11) is designed such that, before the at least one first memory control unit (3) changes from a normal-power operating mode to a low-power operating mode, it writes first configuration data from the registers (5) in the at least one first memory control unit (3) to the buffer store (12).

4. Processor/memory system (10) according to one or more of the preceding claims,
**characterized by**
- a second control unit (13) for controlling the configuration unit (11, 12), with the second control unit (13) in particular being in the form of hardware.

5. Processor/memory system (10) according to one or more of the preceding claims,
**characterized**
- **in that** the configuration unit (11, 12) or, if appropriate, the data transfer unit (11) is programmable.

6. Processor/memory system (10) according to one or more of Claims 2 to 5,
**characterized**
- **in that** two or more sets of first configuration data for the configuration of the at least one first memory control unit (3) are stored in the buffer store (12).

7. Processor/memory system (10) according to Claim 6,
**characterized**
- **in that**, before the at least one first memory control unit (3) changes from a normal-power operating mode to a low-power operating mode, control information is stored in the buffer store (12), with the control information providing information as to which set of first configuration data will be written to the registers (5) of the at least one first memory control unit (3) on returning to a normal-power operating mode, or
- **in that** this control information is produced by the second control unit (13) on returning to a normal-power operating mode.

8. Processor/memory system (10) according to one or more of the preceding claims,
**characterized**
- **in that** a predetermined processor (A) is designed to configure the configuration unit (11, 12) or, if appropriate, the data transfer unit (11).

9. Processor/memory system (10) according to Claim 8,
**characterized**
- **in that** the predetermined processor (A) is designed to produce two or more sets of second configuration data for the configuration of the configuration unit (11, 12) or, if appropriate, the data transfer unit (11), and to store these sets in particular in the buffer store (12).

10. Processor/memory system (10) according to Claim 9,
**characterized**
- **in that** at least one further processor (B, C) is designed to select one of the sets of second configuration data for the configuration of the configuration unit (11, 12) or, if appropriate, of the data transfer unit (11).

11. Processor/memory system (10) according to one or more of Claims 2 to 10,
**characterized**
- **in that** the data transfer unit (11) comprises a DMA controller.

12. Processor/memory system (10) according to one or more of the preceding claims,
**characterized**
- **in that** the memory unit (2) is likewise in a low-power operating mode when the at least one first memory control unit (3) is in a low-power operating mode.

13. Method for changing at least one processor (A, B, C) in the processor/memory system (10) according to one or more of the preceding claims from a low-power operating mode to a normal-power operating mode, with the at least one first memory control unit (3) being in a low-power operating mode at the start of the method, comprising the following steps:
(a) a supply voltage is applied to the at least one first memory control unit (3);
(b) the at least one first memory control unit (3) is configured by the configuration unit (11, 12); and
(c) the at least one processor (A, B, C) is changed from a low-power operating mode to a normal-power operating mode,
**characterized in that** the configuration unit (11, 12) is in a normal-power operating mode at the start of the method.

14. Method according to Claim 13,
**characterized**
- **in that** the step (a) is started by a control signal which is produced by the second control unit (13).

15. Method for changing the at least one first memory control unit (3) in the processor/memory system (10) according to one or more of Claims 2 to 12 from a normal-power operating mode to a low-power operating mode, comprising the following steps:
(a) first configuration data, which is stored in the registers (5) of the at least one first memory control unit (3), is stored in the buffer store (12);
(b) the at least one first memory control unit (3) is disconnected from a supply voltage.

16. Method according to Claim 15,
**characterized**
- **in that** the step (a) is started by a control signal which is produced by the second control unit (13).

## Revendications

1. Système processeur/mémoire ( 10 ) comportant
- au moins un processeur ( A, B, C ),
- une unité de mémorisation ( 2 ),
- au moins une première unité de commande de mémoire ( 3 ) destinée à commander des accès à l'unité de mémorisation ( 2 ) par l'au moins un processeur ( A, B, C ), et
- une unité de configuration ( 11, 12 ), qui est réalisée sous forme matérielle et qui est conçue pour configurer l'au moins une première unité de commande de mémoire ( 3 ) lorsque l'au moins une première unité de commande de mémoire ( 3 ) passe d'un mode de fonctionnement à basse puissance dans un mode de fonctionnement à puissance normale,
**caractérisé en ce que** l'unité de configuration ( 11, 12 ) reste dans un mode de fonctionnement à puissance normale alors que l'au moins une première unité de commande de mémoire ( 3 ) est dans le mode de fonctionnement à basse puissance.

2. Système processeur/mémoire ( 10 ) selon la revendication 1, **caractérisé en ce que**
- l'unité de configuration comporte une unité de transfert de données ( 11 ) et une mémoire tampon ( 12 ), l'unité de transfert de données ( 11 ) étant conçue de façon à transcrire des premières données de configuration de l'au moins une première unité de commande de mémoire ( 3 ) de la mémoire tampon ( 12) dans des registres ( 5 ) de l'au moins une première unité de commande de mémoire ( 3 ) lorsque l'au moins une première unité de commande de mémoire ( 3 ) passe d'un mode de fonctionnement à basse puissance dans un mode de fonctionnement à puissance normale.

3. Système processeur/mémoire ( 10 ) selon la revendication 2, **caractérisé en ce que**
- l'unité de transfert de données ( 11 ) est conçue de façon à transcrire des premières données de configuration des registres ( 5 ) de l'au moins une première unité de commande de mémoire ( 3 ) dans la mémoire tampon ( 12 ) avant que l'au moins une première unité de commande de mémoire ( 3 ) ne passe d'un mode de fonctionnement à puissance normale dans un mode de fonctionnement à basse puissance.

4. Système processeur/mémoire ( 10 ) selon l'une ou plusieurs des revendications précédentes, **caractérisé par**
- une deuxième unité de commande ( 13 ) destinée à commander l'unité de configuration ( 11, 12 ), la deuxième unité de commande ( 13 ) étant notamment réalisée sous forme matérielle.

5. Système processeur/mémoire ( 10 ) selon l'une ou plusieurs revendications précédentes, **caractérisé en ce que**
- l'unité de configuration ( 11, 12 ) ou éventuellement l'unité de transfert de données ( 11 ) est programmable.

6. Système processeur/mémoire ( 10 ) selon l'une ou plusieurs revendications 2 à 5, **caractérisé en ce que**
- plusieurs ensembles de premières données de configuration de l'au moins une première unité de commande de mémoire ( 3 ) sont stockés dans la mémoire tampon ( 12 ).

7. Système processeur/mémoire ( 10 ) selon la revendication 6, **caractérisé en ce que**
- une information de commande est stockée dans la mémoire tampon ( 12 ) avant que l'au moins une première unité de commande de mémoire ( 3 ) ne passe d'un mode de fonctionnement à puissance normale dans un mode de fonctionnement à basse puissance, l'information de commande indiquant l'ensemble de premières données de configuration qui est écrit dans les registres ( 5 ) de l'au moins une première unité de commande de mémoire ( 3 ) lors d'un retour à un mode de fonctionnement à puissance normale, ou
- cette information de commande est produite par la deuxième unité de commande ( 13 ) lors du retour à un mode de fonctionnement à puissance normale.

8. Système processeur/mémoire ( 10 ) selon l'une ou plusieurs des revendications précédentes, **caractérisé en ce que**
- un processeur prescrit ( A ) est conçu pour configurer l'unité de configuration ( 11, 12 ) ou éventuellement l'unité de transfert de données ( 11 ).

9. Système processeur/mémoire ( 10 ) selon la revendication 8, **caractérisé en ce que**
- le processeur prescrit ( A ) est conçu pour produire plusieurs ensembles de deuxièmes données de configuration de l'unité de configuration ( 11, 12 ) ou éventuellement de l'unité de transfert de données ( 11 ) et les stocker notamment dans la mémoire tampon ( 12).

10. Système processeur/mémoire ( 10 ) selon la revendication 9, **caractérisé en ce que**
- au moins un autre processeur ( B, C ) est conçu pour sélectionner l'un des ensembles de deuxièmes données de configuration de l'unité de configuration ( 11, 12) ou éventuellement de l'unité de transfert de données ( 11 ).

11. Système processeur/mémoire ( 10 ) selon l'une ou plusieurs des revendications 2 à 10, **caractérisé en ce que**
- l'unité de transfert de données ( 11 ) comporte un contrôleur DMA.

12. Système processeur/mémoire ( 10 ) selon l'une ou plusieurs des revendications précédentes, **caractérisé en ce que**
- l'unité de mémorisation ( 12 ) se trouve également dans un mode de fonctionnement à basse puissance lorsque l'au moins une première unité de commande de mémoire ( 3 ) est dans un mode de fonctionnement à basse puissance.

13. Procédé de passage d'au moins un processeur ( A, B, C ) du système processeur/mémoire ( 10 ) selon l'une ou plusieurs des revendications précédentes d'un mode de fonctionnement à basse puissance dans un mode de fonctionnement à puissance normale, l'au moins une première unité de commande de mémoire ( 3 ) se trouvant au début du procédé dans un mode de fonctionnement à basse puissance, ledit procédé comportant les étapes consistant à :
( a ) alimenter l'au moins une première unité de commande de mémoire ( 3 ) en une tension d'alimentation ;
( b ) faire configurer l'au moins une première unité de commande de mémoire ( 3 ) par l'unité de configuration ( 11, 12 ) ; et
( c ) faire passer l'au moins un processeur ( A, B, C) d'un mode de fonctionnement à basse puissance dans un mode de fonctionnement à puissance normale,
**caractérisé en ce que** l'unité de configuration ( 11, 12 ) se trouve au début du procédé dans un mode de fonctionnement à puissance normale.

14. Procédé selon la revendication 13, **caractérisé en ce que**
- l'étape ( a ) est lancée par un signal de commande produit par la deuxième unité de commande ( 13 ).

15. Procédé de passage de l'au moins une première unité de commande de mémoire ( 3 ) du système processeur/mémoire ( 10 ) selon l'une ou plusieurs des revendications 2 à 12 d'un mode de fonctionnement à puissance normale dans un mode de fonctionnement à basse puissance, ledit procédé comportant les étapes consistant à :
( a ) mémoriser dans la mémoire tampon ( 12 ) des premières données de configuration stockées dans les registres ( 5 ) de l'au moins une première unité de commande de mémoire ( 3 ) ;
( b ) séparer d'au moins une première unité de commande de mémoire ( 3 ) d'une tension d'alimentation.

16. Procédé selon la revendication 15, **caractérisé en ce que**
- l'étape ( a ) est lancée par un signal de commande produit par la deuxième unité de commande ( 13 ).
